# EUROPEAN PATENT SPECIFICATION

(11) **EP 0 571 451 B1**
(45) Date of publication and mention of the grant of the patent: **26.01.2000**
(21) Application number: 92904557.3
(22) Date of filing: 17.02.1992
(51) Int. Cl.: C09D 11/00

(54) **EDIBLE JET INK COMPOSITION AND METHOD**
Essbare Tintenspritzzusammensetzung und Methode
COMPOSITION MANGEABLE ET PROCEDE DE JET D'ENCRE

(30) Priority: 16.02.1991 GB 9103313
(43) Date of publication of application: 01.12.1993
(73) Proprietor: WILLETT INTERNATIONAL LIMITED, Corby, Northants. NN18 8AQ (GB)
(72) Inventor: LYON, Peter, John, Manchester M25 7WL (GB)
(74) Representative: Dummett, Thomas Ian Peter
(86) International application number: GB9200277
(87) International publication number: WO9214795

(56) References cited:
- FR-A- 2 325 704
- FR-A- 2 339 660
- GB-A- 2 004 904
- GB-A- 2 184 742
- US-A- 4 352 901

## Description

The present invention relates to a composition and to a method for using it, notably to an ink containing acetone as the solvent or carrier medium and to a method for printing images with the ink compositions using an ink jet printer.

### BACKGROUND TO THE INVENTION:

A number of forms of ink jet printer have been used to apply ink compositions to a wide range of substrates. In many cases the ink is put up in the form of a solution or suspension in an organic solvent, notably MEK. The use of MEK provides an ink which is highly suitable for use in ink jet printers, since it gives an ink which can readily be jetted, which is aggressive to many plastic substrates so that the printed image adheres firmly to the substrate, and which dries rapidly so that the printed image resists smudging or smearing allowing the printed substrate to be handled almost immediately after printing. Furthermore, MEK readily dissolves most of the dyestuffs and other components used in ink compositions, giving the printer the freedom to use a wide range of ink compositions.

Despite the many technical advantages in the use of MEK, major problems arise in that MEK presents health hazards when inhaled or allowed to contact the skin. Its use is becoming less and less acceptable from an environmental standpoint and it cannot be used to apply coding or other printing directly to foodstuffs.

It has therefore been proposed to use lower alkanols or water and mixtures thereof as the solvent or carrier medium for inks to be applied to foodstuffs. Whilst such solvent or carrier media reduce or avoid the physiological problems associated with MEK, ink formulations using water as the solvent or carrier dry slowly. In an attempt to reduce the drying time to an acceptable level, typically less than 5 seconds, the water was mixed with alcohol. However, where the level of alcohol was increased beyond 50% by weight, problems were encountered with precipitation of certain commonly used dyestuffs from the composition. Furthermore, the presence of the alcohol caused the printed droplets to spread upon the substrate, giving an unacceptable image.

In an attempt to reduce the spreading problem, a number of additives, for example silicones, surfactants and edible oils, were added to the ink composition, without success. Surprisingly, we have found that acetone is particularly suitable for use as the solvent or carrier medium for ink compositions to be applied to foodstuffs and that such a solvent reduces many of the problems associated with water, alcohols and other physiologically acceptable solvents.

US-A-4 352 901 relates to an ink composition which uses a solvent mixture containing acetone, water, MEK, and methanol and hydroxycellulose ester as the binder for the ink.

### SUMMARY OF THE INVENTION:

Accordingly, the present invention provides an edible ink composition suitable for application through the nozzle of an ink jet printer, which ink comprises a physiologically acceptable image forming ingredient, and a physiologically acceptable film forming binder dissolved or dispersed in a carrier medium, characterised in that the carrier medium comprises acetone, water and optionally an alkanol containing from 1 to 3 carbon atoms.

The ink compositions of the invention preferably have a viscosity of less that 40 Cps at 25° C, for example less than 10 Cps, notably from 1 to 6 Cps, and the desired viscosity can often be achieved by selection of the mixture of solvents used and/or by the addition of a cellulosic or other thickening agent. The thickening agent may also serve as the binder or film-forming agent typically present in ink jet printer ink compositions to provide the printed droplets with a measure of abrasion and/or water resistance.

Where an alkanol is present, the alkyl moieties in the alkanol contain from 1 to 3 carbon atoms;

The solvent is a mixture of acetone with water, preferably de-ionised or distilled water, in weight proportions of from 3:1 to 1:1. Where an alkanol is present, it is present in less than 30% by weight of the total solvent or carrier medium.

The composition of the invention also contains an image forming component which is soluble or dispersed in the solvent/carrier medium. The image forming component can be of any suitable form having regard to the purpose to which the image on the substrate is to be put. Thus, the component can be one which fluoresces under ultra violet light or which can be detected by a magnetic reader. However, it is preferred that the component be one which forms a visible image on the substrate, for example a dyestuff or a pigment. For convenience, the invention will be described hereinafter in terms of a dyestuff.

Preferably, the image forming ingredient is dissolved in the solvent medium and the solvent medium consists of water and acetone. For convenience, the invention will be described hereinafter in terms of a solution of the image forming ingredient in a solvent medium.

The dyestuff for present use may be put up in an aqueous, ethanol, acetone or other suitable solvent, and the solution incorporated into the solvent medium for present use using any suitable mixing technique. The dyestuff may also be available in the form of a particulate solid or pigment, which can be used as such for direct dissolution in the solvent medium. Many forms of suitable dyestuff, notably water soluble food grade dyestuffs, are commercially available and may be used in their commercially available purity. However, some commercial dyestuffs contain extenders and residual salts from the neutralisation of sulphonic or other acidic groups in the dyestuff molecule. It is preferred to use dyestuffs which contain less than 5% by weight of these and other materials, excluding the solvent, which may be present.

The ink composition also contain one or more film-forming resins to aid adhesion of the ink droplet to the substrate and to provide a measure of protection to the dried droplet against abrasion and the action of water or other solvents contacting the dried droplet. Such resins will be organic resins selected from a shellac or a cellulose ethers. Such resins can be used in their commercially available forms.

It is preferred that the ink compositions for present use contain from 0.1 to 6% by weight of the edible dyestuff, notably less than 5%; and from 0.05 to 40%, preferably from 0.1 to 20%, by weight of the binder or film-forming component, selected from a cellulose ether or a shellac based on the total weight of the ink composition.

Where the ink is to be applied through a continuous ink jet printer, it will use solvent mixtures containing from 3:1 to 1:1 by weight of acetone to water. It will also usually be necessary to incorporate one or more ionic components into the ink so that it will have sufficient conductivity to accept the charge to be induced in it. Typically, it will be desired to use an ink composition with a conductivity of from 500 to 2500, preferably 750 to 1250, microSiemens per centimetre. This is achieved by the incorporation of one or more ionic materials into the ink, which may incidentally be present in one or more of the desired components, for example as salts in the dyestuff or the dyestuff itself. Suitable salts which may be added include edible or food grade ammonium, sodium or potassium salts of organic acids, such as acetic acid, lactic acid or propionic acid, or of inorganic acids, such as hydrochloric, sulphuric or phosphoric acids. The ammoniation of a component of the ink composition may also be used to provide at least part of the conductivity required in the composition. Such an ammoniated component is often readily soluble in the solvent medium but reverts to a water insoluble form due to loss of the ammonia from the printed droplet, whereby the component provides the printed droplet with enhanced water resistant properties.

It is preferred that the component to be ammoniated be a binder, containing shellac.

The ink compositions for present use can be made by any suitable method, for example by mixing together solutions of the components in one or more of the solvents and then diluting the mixture to the desired concentration with further solvent.

The invention further provides a process for printing an image with an ink composition of the invention, characterised in that the composition is applied through the nozzle orifice of an ink jet printer.

Ink jet printers are non-contact printers in which discrete droplets of the ink are applied to individually selected positions on a substrate so as to form the desired image on the substrate. The ink jet printer can be of the drop on demand type in which discrete droplets of ink are ejected from an array of nozzles past which the substrate passes, the nozzles being activated at the desired frequency and in the desired order to form the desired image on the substrate. Thus, the printer can be one in which ink under pressure flows to the nozzles via valving means which are actuated under the control of a computer or the like to allow ink to flow to the required nozzle to eject a droplet from that nozzle. Alternatively, ink can be fed to an ink chamber provided with a piezoelectric crystal which modifies the shape of the chamber when a voltage is applied to the crystal so as to eject a droplet of ink from a nozzle outlet to the chamber. For convenience such types of printer will be designated generally hereinafter as drop on demand ink jet printers.

Alternatively, the droplets can be applied by what is known as a continuous ink jet printer in which ink is fed under pressure from a reservoir through a nozzle to form a jet of ink. This jet is broken up into discrete substantially uniformly sized and spaced apart droplets by applying vibration or pressure pulses to the ink. This can be achieved by vibrating the nozzle or the nozzle assembly by means of a piezoelectric crystal, or by immersing a vibration probe, for example a piezoelectric crystal rod, in the ink itself. The ink is charged by applying a voltage between the ink jet before it breaks up into droplets and a charge electrode, so that each droplet carries a known charge. The charged droplets then pass through a deflection electric field where they are deflected from their straight line of flight by the deflection field applied. The extent of deflection will determine the point at which the droplets strike a substrate passing the printer and the charge and/or deflection fields are varied to direct the droplets to the desired location on the substrate. Droplets which are not to be printed are not deflected but are caught in a catcher or gutter and are returned to the ink reservoir for re-use. Such ink jet printers are generally denoted as continuous ink jet printers hereinafter.

Many forms of the above types of printer are known and commercially available and may be used without modification in the method of the invention.

As stated above, the compositions of the invention are suitable for use in printing images on foodstuffs or the packaging for foodstuffs since the solvent is edible and indeed forms part of the human metabolic cycle. It is therefore preferred to use components in the composition which are food grade or edible to ensure that the potential benefit of the acetone solvent is achieved.

The ink compositions of the invention and their application through a commercially available continuous ink jet printer will now be described by way of illustration in the following Examples in which all parts and percentages are given by weight unless stated otherwise:

### Example 1:

An ink composition was made by mixing acetone (71.1 parts) with de-ionised water (25 parts), adding the dyestuffs Erythrosine E127 (2 parts) and Patent blue V E131 (0.2 parts) and stirring at room temperature (20°C) until all the dyestuff had dissolved. The viscosity of the mixture was adjusted to within the range 3 - 4 Cps at 20°C by the addition with stirring of the hydroxypropyl cellulose sold under the Trade Mark Klucel EF (1.7 parts).

The conductivity of the resultant ink was in the range 1150 to 1250 microSiemens per centimetre. The ink composition could be applied through either a drop on demand printer or through a continuous jet printer to give droplets which dried rapidly and did not spread to an appreciable extent. Substantially all of the acetone in the ink composition evaporated from the printed droplet to give a solid printed droplet which contained edible materials. Since acetone is a material involved in the human metabolic chain, the ink composition can be applied directly to foodstuffs, such as eggs, fruit, pies and pastries as well as to the packaging for these and other foodstuffs.

### Example 2: (for comparative purpose)

The process of Example 1 was repeated, except that the amount of water was reduced to 18 parts and the amount of acetone was increased to 76 parts. The ink could be printed as in Example 1, but tended to precipitate the Erythrosine dye upon standing at room temperature for three days, whereas the composition of Example 1 was stable over at least three weeks.

### Example 3:

An ink composition was made by mixing together acetone (46.8 parts), de-ionised water (21 parts) and ammonia (10% aqueous solution, 4 parts) at room temperature. The dyestuffs Erythrosine E 127 (2 parts) and Patent blue V E131 (0.2 parts) were added to the mixture and stirred to dissolve them. Shellac (50% solution in ethanol) was added and stirred to dissolve it. If solid shellac is used in place of the ethanol solution, dissolution in the acetone/water/ammonia mixture is slow and incomplete unless 10 to 20 parts of ethanol are present in the solvent mixture.

The resulting ink can be applied through the nozzle of a continuous jet printer and gives a good print image which is resistant to boiling water for more than 5 minutes. Again, since all the ingredients of the ink are edible or food grade, the printed droplets can be applied directly to foodstuffs.

## Claims

1. An edible ink composition suitable for application through the nozzle of an ink jet printer to a foodstuff or to packaging in immediate contact with a foodstuff, characterised in that the ink composition comprises:
a. a physiologically acceptable image forming ingredient, and
b. a physiologically acceptable film forming binder selected from a cellulose ether or a shellac
dissolved or dispersed in a carrier medium comprising:
c. acetone,
d. water and
e optionally an alkanol containing from 1 to 3 carbon atoms,
the acetone and water being present in weight proportions of from 3:1 to 1:1 and the alkanol being present in up to 30% by weight of the carrier medium.

2. An ink composition as claimed in claim 1, characterised in that the ink composition contains from 0.1 to 6% of an edible dyestuff, and from 0.1 to 20% of the cellulose ether.

3. An ink composition as claimed in claim 1, characterised in that the ink composition contains from 0.1 to 6% of an edible dyestuff, and from 0.1 to 20% of shellac.

4. An ink composition as claimed in claim 3, characterised in that the shellac is an ammoniated shellac.

5. An ink composition as claimed in any one of the preceding claims, characterised in that the ink composition has a conductivity of from 750 to 1250 microSiemens per centimetre.

6. An ink composition as claimed in any one of the preceding claims, characterised in that the image forming ingredient is a water soluble food grade dyestuff.

7. An ink composition as claimed in any one of the preceding claims, characterised in that the cellulose ether is hydroxypropyl cellulose.

8. An ink composition as claimed in claim 1, characterised in that it consists of:
a. less than 5% by weight of a water soluble edible dye, and
b. from 0.05 to 40% by weight of hydroxypropyl cellulose, shellac or an ammoniated shellac
dissolved or dispersed in a carrier medium comprising:
c. acetone,
d. water and
e optionally ethanol,
the acetone and water being present in weight proportions of from 3:1 to 1:1 and the ethanol being present in up to 30% by weight of the carrier medium.

9. A method for applying an edible image to a foodstuff or to packaging in immediate contact with the foodstuff, characterised in that an edible ink as claimed in any one of claims 1 to 8 is applied by an ink jet printer to the foodstuff or packaging.

## Patentansprüche

1. Eßbare Tinten-Zusammensetzung, die geeignet ist für die Aufbringung auf ein Lebensmittel oder eine Verpackung in direktem Kontakt mit einem Lebensmittel durch die Düse eines Tintenstrahldruckers, dadurch charakterisiert, daß die Tintenzusammensetzung umfaßt:
a. einen physiologisch verträglichen bildformenden Bestandteil, und
b. einen physiologisch verträglichen filmformenden Binder, der ausgewählt wird aus einem Celluloseether oder einem Schellack
gelöst oder dispergiert in einem Trägermedium, welches umfaßt:
c. Aceton,
d. Wasser und
e. gegebenenfalls einen 1 bis 3 Kohlenstoffatome enthaltenden Alkohol,
wobei das Aceton und Wasser in Gewichtsverhältnissen von 3 : 1 bis 1 : 1 anwesend sind und der Alkohol in bis zu 30 Gew.-% des Trägermediums anwesend ist.

2. Tinten-Zusammensetzung wie in Anspruch 1 beansprucht, dadurch charakterisiert, daß die Tinten-Zusammensetzung von 0,1 bis 6 % eines eßbaren Farbstoffs und von 0,1 bis 20 % des Celluloseethers enthält.

3. Tinten-Zusammensetzung wie in Anspruch 1 beansprucht, dadurch charakterisiert, daß die Tintenzusammensetzung von 0,1 bis 6 % eines eßbaren Farbstoffs und von 0,1 bis 20 % Schellack enthält.

4. Tinten-Zusammensetzung wie in Anspruch 3 beansprucht, dadurch charakterisiert, daß der Schellack ein Schellack-Aminsalz ist.

5. Tinten-Zusammensetzung wie in einem der vorstehenden Ansprüche beansprucht, dadurch charakterisiert, daß die Tinten-Zusammensetzung eine Leitfähigkeit von 750 bis 1250 MikroSiemens pro Zentimeter aufweist.

6. Tinten-Zusammensetzung wie in einem der vorstehenden Ansprüche beansprucht, dadurch charakterisiert, daß der bildformende Bestandteil ein wasserlöslicher Farbstoff mit Lebensmittelgrad ist.

7. Tinten-Zusammensetzung wie in einem der vorstehenden Ansprüche beansprucht, dadurch charakterisiert, daß der Celluloseether Hydroxypropylcellulose ist.

8. Tinten-Zusammensetzung wie in Anspruch 1 beansprucht, dadurch charakterisiert, daß sie besteht aus:
a. weniger als 5 Gew.-% eines wasserlöslichen eßbaren Farbstoffs, und
b. von 0,05 bis 40 Gew.-% Hydroxypropylcellulose, Schellack oder einem Schellack-Aminsalz
gelöst oder dispergiert in einem Trägermedium, welches umfaßt:
c. Aceton
d. Wasser und
e. gegebenenfalls Ethanol,
wobei das Aceton und Wasser in Gewichtsverhältnissen von 3 : 1 bis 1 : 1 vorhanden sind und das Ethanol in bis zu 30 Gew.-% des Trägermediums anwesend ist.

9. Verfahren zur Anbringung eines eßbaren Bilds auf einem Lebensmittel oder der Verpackung in direktem Kontakt mit dem Lebensmittel, dadurch charakterisiert, daß eine eßbare Tinte, wie in einem der Ansprüche 1 bis 8 beansprucht, durch einen Tintenstrahldrucker auf das Lebensmittel oder die Verpackung aufgetragen wird.

## Revendications

1. Composition d'encre comestible prévue pour l'application par l'intermédiaire de la tuyère d'une imprimante à jet d'encre sur un produit alimentaire ou sur un emballage en contact immédiat avec un produit alimentaire, caractérisée en ce que la composition d'encre comprend :
a. un ingrédient formant une image physiologiquement acceptable, et
b. un liant formant un film physiologiquement acceptable choisi à partir d'éther de cellulose
ou d'une gomme-laque dissoute ou dispersée dans un milieu porteur comprenant :
c. de l'acétone,
d. de l'eau et
e. facultativement un alcanol contenant de 1 à 3 atomes de carbone,
l'acétone et l'eau étant présentes dans des proportions pondérales de 3:1 à 1:1 et l'alcanol étant présent dans des proportions jusqu'à 30% en poids du milieu porteur.

2. Composition d'encre selon la revendication 1, caractérisée en ce que la composition d'encre contient de 0,1 à 6% d'un colorant comestible et de 0,1 à 20% de l'éther de cellulose.

3. Composition d'encre selon la revendication, 1, caractérisée en ce que la composition d'encre contient de 0,1 à 6% d'un colorant comestible de 0,1 à 20% de gomme-laque.

4. Composition d'encre selon la revendication 3, caractérisée en ce que la gomme-laque est une gomme-laque ammoniaquée.

5. Composition d'encre selon l'une quelconque des revendications précédentes, caractérisée en ce que la composition d'encre présente une conductivité de 750 à 1250 microSiemens par centimètre.

6. Composition d'encre selon l'une quelconque des revendications précédentes, caractérisée en ce que l'ingrédient formant image est un colorant de qualité alimentaire hydrosoluble.

7. Composition d'encre selon l'une quelconque des revendications précédentes, caractérisée en ce que l'éther de cellulose est de l'hydroxypropylcellulose.

8. Composition d'encre selon la revendication 1, caractérisée en ce qu'elle consiste en :
a. moins de 5% en poids d'un colorant comestible hydrosoluble, et
b. de 0,05 à 40% en poids d'hydroxypropylcellulose de gomme-laque ou de gomme-laque ammoniaquée ,
dissous dispersé dans un milieu porteur comprenant :
c. de l'acétone,
d. de l'eau et
e. facultativement de l'éthanol,
l'acétone et l'eau étant présentes dans des proportions pondérales de 3:1 à 1:1 et l'éthanol étant présent des proportions jusqu'à 30% en poids du milieu porteur.

9. Procédé pour l'application d'une image comestible sur un produit alimentaire ou sur un emballage en contact immédiat avec le produit alimentaire, caractérisé en ce que l'on applique une encre comestible telle que revendiquée dans l'une quelconque des revendications 1 à 8 au moyen d'une imprimante à jet d'encre sur le produit alimentaire ou sur l'emballage.
